# EUROPÄISCHE PATENTSCHRIFT

(11) **EP 3 277 569 B1**
(45) Veröffentlichungstag und Bekanntmachung des Hinweises auf die Patenterteilung: **09.10.2019**
(21) Anmeldenummer: 16711978.3
(22) Anmeldetag: 03.02.2016
(51) Int. Cl.: B62M 6/45, B62M 9/123, B62M 9/133

(54) **VORRICHTUNG UND VERFAHREN ZUM AUTOMATISCHEN SCHALTEN EINES SCHALTGETRIEBES EINES FAHRRADES**
DEVICE AND METHOD FOR AUTOMATICALLY SHIFTING A GEARSHIFT MECHANISM OF A BICYCLE
DISPOSITIF ET PROCÉDÉ PERMETTANT UN CHANGEMENT DE VITESSE AUTOMATIQUE D'UN MÉCANISME DE CHANGEMENT DE VITESSE D'UN VÉLO

(30) Priorität: 02.04.2015 DE 102015206037
(43) Veröffentlichungstag der Anmeldung: 07.02.2018
(73) Patentinhaber: Schaeffler Technologies AG & Co. KG, 91074 Herzogenaurach (DE)
(72) Erfinder: KEMPE, Fabian, 91448 Emskirchen (DE); HERBRICH, Matthias, 90766 Fürth (DE); MÜNCH, Dagmar, 60327 Frankfurt (DE); WEIPPERT, Ralf, 97493 Bergrheinfeld (DE); DRESCHER, Thomas, 96193 Wachenroth (DE)
(86) Internationale Anmeldenummer: PCT/DE2016/200069
(87) Internationale Veröffentlichungsnummer: WO 2016/155714

(56) Entgegenhaltungen:
- EP-A2- 1 384 659
- EP-A2- 1 527 990
- EP-A2- 1 595 777
- DE-A1- 19 528 133
- US-A1- 2002 094 906
- US-A1- 2007 213 150

## Beschreibung

Die Erfindung betrifft eine Vorrichtung und ein Verfahren zum automatischen Schalten eines Schaltgetriebes eines Fahrrades, insbesondere eines Elektrofahrrades. Die Vorrichtung umfasst dabei mindestens einen Schaltaktuator zur automatischen Betätigung des Schaltgetriebes, mindestens eine mit dem mindestens einen Schaltaktuator verbundene Recheneinheit, eine mit der mindestens einen Recheneinheit verbundene Bedien- und Anzeigeeinheit, mindestens einen Neigungswinkelsensor zur Erfassung einer aktuellen Geländeneigung und mindestens einen weiteren Sensor zur Erfassung einer aktuellen Fahrgeschwindigkeit des Fahrrades, wobei der mindestens eine Neigungswinkelsensor und der mindestens eine weitere Sensor mit der mindestens einen Recheneinheit verbunden sind. Die Erfindung betrifft weiterhin eine Verwendung der Vorrichtung.

Derartige Vorrichtungen und Verfahren zum automatischen Schalten eines Schaltgetriebes eines Fahrrades sind bereits bekannt.

So offenbart die DE 195 28 133, welche die Präambel des Anspruchs 1 offenbart, eine Vorrichtung zum last- und geschwindigkeitsabhängigen automatischen Schalten von Fahrrad-Gangschaltungen. Dabei werden an einen, am Fahrradlenker montierten Steuerrechner verschiedene elektrische Informationen, wie eine Fahrgeschwindigkeit, eine Tretkraft bzw. ein Tretmoment, eine Steigung oder Neigung der Fahrbahn und eine Tretdrehzahl oder Tretfrequenz übermittelt. Diese Informationen werden über am Fahrrad montierte elektrische Sensoren ermittelt, wobei unter anderem ein Neigungssensor vorhanden ist. Es wird im Steuerrechner eine momentane Lastsituation errechnet, die dieser Lastsituation am besten angepasste Getriebeübersetzung ermittelt und in Folge der entsprechende Gang automatisch am Fahrrad eingelegt. Der Steuerrechner verfügt dabei über eine Anzeigeeinheit für eine Anzeige der Fahrgeschwindigkeit, der Fahrstrecke, der Fahrzeit und des aktuell eingelegten Ganges. Um dem Fahrradfahrer eine Einflussmöglichkeit auf die ihm angebotene Getriebeübersetzung zu geben und eine manuelle Anpassung der automatisch eingestellten Getriebeübersetzung in Abhängigkeit seiner aktuellen Konstitution und Leistungsfähigkeit zu ermöglichen, ist ein Informationsgeber in Form einer Schaltereinheit am Lenker des Fahrrades vorhanden. Über diese Schaltereinheit kann der Fahrradfahrer unmittelbar in die Steuerung eingreifen und zwischen einer "leichten", "normalen" oder "schweren" Übersetzung bzw. Lastkurve wählen. Weiterhin kann ein "Einfrieren" des aktuell gewählten Ganges erfolgen, um unerwünschte Gangwechsel zu unterdrücken. Der Steuerrechner übermittelt die Schaltsignale an mindestens einen Servosteller, der die Gangschaltung automatisch betätigt.

Die EP 2377713 A1 beschreibt ein Elektrofahrrad, bei welchem automatisch die benötigte Hilfsantriebskraft des elektrischen Motors, unter anderem in Abhängigkeit der Geländeneigung, ermittelt und zugeschaltet wird.

Es hat sich allerdings gezeigt, dass Fahrradfahrer derartige vorgefertigte Möglichkeiten zur Einflussnahme auf den Schaltvorgang als nicht ausreichend komfortabel empfinden und aufgrund ihrer individuellen Konstitution und Leistungsfähigkeit eine weiter diversifizierte und hochgradig individualisierte Einstellung des Schaltalgorithmus wünschen.

Es ist daher Aufgabe der Erfindung, eine Vorrichtung und ein Verfahren zum automatischen Schalten eines Schaltgetriebes eines Fahrrades bereitzustellen, mit welchen eine individuellere Anpassung der Schaltstrategie an die persönlichen Bedürfnisse des jeweiligen Fahrradfahrers ermöglicht wird.

Die Aufgabe wird für die Vorrichtung zum automatischen Schalten eines Schaltgetriebes eines Fahrrades, insbesondere eines Elektrofahrrades, umfassend mindestens einen Schaltaktuator zur automatischen Betätigung des Schaltgetriebes, mindestens eine mit dem mindestens einen Schaltaktuator verbundene Recheneinheit, eine mit der mindestens einen Recheneinheit verbundene Bedien- und Anzeigeeinheit, mindestens einen Neigungswinkelsensor zur Erfassung einer aktuellen Geländeneigung und mindestens einen weiteren Sensor zur Erfassung einer aktuellen Fahrgeschwindigkeit des Fahrrades, wobei der mindestens eine Neigungswinkelsensor und der mindestens eine weitere Sensor mit der mindestens einen Recheneinheit verbunden sind, dadurch gelöst, dass die Bedien- und Anzeigeeinheit
- eine erste Eingabeeinrichtung zur Eingabe eines ersten Eingabewertes E1 in Form eines Ganges des Schaltgetriebes zum Anfahren auf einer ebenen Fahrbahn bereitstellt,
- eine zweite Eingabeeinrichtung zur Eingabe eines zweiten Eingabewertes E2 in Form einer Fahrgeschwindigkeit des Fahrrades bereitstellt, bei welcher auf ebener Fahrbahn in einen maximalen Gang des Schaltgetriebes geschalten wird,
- eine dritte Eingabeeinrichtung zur Eingabe eines dritten Eingabewertes E3 in Form einer weiteren Fahrgeschwindigkeit des Fahrrades aufweist, bei welcher auf einer Fahrbahn mit einer positiven Geländeneigung in einen für diese Geländeneigung maximalen bzw. optimalen Gang geschalten wird, und wobei
in der mindestens einen Recheneinheit ein auf Basis des ersten, zweiten und dritten Eingabewertes individualisierbarer Schaltalgorithmus hinterlegt ist.

Die Vorrichtung ermöglicht die Eingabe von individuellen Eingabewerten zur Beeinflussung einer Schaltstrategie zum automatischen Schalten des Schaltgetriebes eines Fahrrads. Es ist eine Vorrichtung vorhanden, die eine an die Konstitution und Leistungsfähigkeit des individuellen Fahrradfahrers anpassbare, individuelle Schaltstrategie ermöglicht, die der optimalen Schaltstrategie, die der Fahrradfahrer bei einer manuellen Einstellung des Schaltgetriebes wählen würde, besonders nahe kommt. Dadurch wird das Bedürfnis zur Einflussnahme auf die Schaltstrategie während der Fahrt vermindert und die Fahrsicherheit und der Fahrkomfort signifikant gesteigert.

Der Schaltaktuator ist dabei insbesondere durch einen Linearschaltaktuator gebildet. Dieser besitzt eine besondere schlanke und langgestreckte Bauform, so dass eine Integration in den Rahmen eines Fahrrades und eine elektrische Anbindung an die Recheneinheit problemlos möglich ist.

Die mindestens eine Recheneinheit ist vorzugsweise in die Bedien- und Anzeigeeinheit integriert angeordnet, kann alternativ aber auch im Rahmen des Fahrrades vorgesehen werden.

Besonders bevorzugt ist es dabei, wenn zumindest die zweite Eingabeeinrichtung und/oder zumindest die dritte Eingabeeinrichtung durch einen Schieberegler gebildet ist. Weiterhin kann aber auch die erste Eingabeeinrichtung mittels eines Schiebereglers bereitgestellt sein. Dies ermöglicht eine schnelle und unkomplizierte Eingabe der die Schaltstrategie individualisierenden Eingabewerte durch den Fahrradfahrer, falls tatsächlich notwendig auch während der Fahrt.

Besonders bevorzugt ist es dabei, wenn die Bedien- und Anzeigeeinheit eine graphische Simulation eines Schiebereglers bereitstellt. Dies ist insbesondere dann von Vorteil, wenn als Bedien- und Anzeigeeinheit ein Mobilgerät mit Touchscreen, insbesondere ein Smartphone, eingesetzt wird, wobei die Eingabeeinrichtungen über eine mobile App bereitgestellt und die Eingabewerte durch diese mobile App abgefragt werden. Der Fahrradfahrer gibt die seinerseits gewünschten Eingabewerte ein, auf deren Basis der in der mindestens einen Recheneinheit hinterlegte Schaltalgorithmus modifiziert und individualisiert wird.

Dabei hat es sich bewährt, wenn die Bedien- und Anzeigeeinheit weiterhin eingerichtet ist, dem Fahrradfahrer ausgewählte aktuelle Fahrdaten, wie die Fahrgeschwindigkeit, die Geländeneigung, die zurückgelegte Fahrstrecke, die Fahrzeit, die Fahrroute, gegebenenfalls zusammen mit Fahrtrichtungshinweisen wie bei einem Navigationsgerät, den eingelegten Gang usw. anzuzeigen. Um eine Navigationsfunktion zu erfüllen, ist in die Bedien- und Anzeigeeinheit bevorzugt eine GPS-Einheit integriert.

Die mindestens eine Recheneinheit ist vorzugsweise eingerichtet, mit Hilfe des ersten Eingabewertes E1, des zweiten Eingabewertes E2 und des dritten Eingabewertes E3 eine Ebene in einem dreidimensionalen Koordinatensystem mit den Koordinaten x, y und z zu definieren, wobei die x-Koordinate einer Fahrgeschwindigkeit entspricht, wobei die y-Koordinate einem Gang des Schaltgetriebes entspricht und wobei die z-Koordinate einer Geländeneigung entspricht. Dabei ist der in der Recheneinheit hinterlegte Schaltalgorithmus auf Basis der definierten Ebene individualisierbar und die mindestens eine Recheneinheit ist eingerichtet, ein Schaltsignal zum Schalten des Schaltgetriebes in einen anderen Gang an den mindestens einen Schaltaktuator auszugeben, wenn ein aktueller Fahrzustand, der durch die aktuelle Fahrgeschwindigkeit, einen aktuell gewählten Gang des Schaltgetriebes und die aktuelle Geländeneigung bestimmt ist, in der definierten Ebene liegt oder sich der definierten Ebene annähert.

Die Ebene wird aus den drei Eingabewerten E1, E2, E3 berechnet, wobei insbesondere eine Hessesche Normalform der Ebenengleichung gewählt wird. Die Ebenengleichung wird als Basis für die individualisierte Schaltstrategie in der mindestens einen Recheneinheit hinterlegt.

Die Position einzelner Schaltpunkte beim Durchschalten vom ersten bis zum höchsten Gang ergibt sich dabei auf Basis einer Geraden zwischen dem Anfahrpunkt bei einer Startgeschwindigkeit von 0 km/h und einem Fahrpunkt mit einer Geschwindigkeit v, bei der in den höchsten Gang geschaltet wird, indem die Schaltpunkte vorzugsweise äquidistant auf der Geraden verteilt angeordnet werden. Es kann aber auch eine nicht äquidistante Verteilung der Schaltpunkte gewählt werden. Dies ermöglicht eine an den individuellen Fahrradfahrer weiter angepasste individuelle Schaltstrategie.

Eine Verwendung einer erfindungsgemäßen Vorrichtung zum automatischen Schalten eines Schaltgetriebes eines Fahrrades, insbesondere eines Elektrofahrrades, hat sich bewährt. Das Elektrofahrrad ist dabei insbesondere durch ein Pedelec oder ein E-Bike gebildet. Ein Pedelec (= Pedal Electric Cycle) ist ein Typ eines Elektrofahrrades, bei welchem ein Elektroantrieb den Fahrradfahrer beim Treten unterstützt. Ein E-Bike ist ein weiterer Typ eines Elektrofahrrades, bei dem ein vorhandener Elektroantrieb mittels eines Drehgriffs am Lenker des Fahrrads gesteuert wird.

Die Aufgabe wird für das Verfahren zum automatischen Schalten eines Schaltgetriebes eines Fahrrades, insbesondere eines Elektrofahrrades, umfassend eine erfindungsgemäße Vorrichtung, mit folgenden Schritten gelöst:
- Auswahl eines Ganges des Schaltgetriebes zum Anfahren auf einer ebenen Fahrbahn mittels der ersten Eingabeeinrichtung;
- Auswahl einer Fahrgeschwindigkeit des Fahrrades, bei welcher auf ebener Fahrbahn in einen maximalen Gang des Schaltgetriebes geschalten wird, mittels der zweiten Eingabeeinrichtung;
- Auswahl einer weiteren Fahrgeschwindigkeit des Fahrrades, bei welcher auf einer Fahrbahn mit einer positiven Geländeneigung in einen für diese Geländeneigung maximalen bzw. optimalen Gang geschalten wird, mittels der dritten Eingabeeinrichtung;
- Individualisieren des in der mindestens einen Recheneinheit hinterlegten Schaltalgorithmus auf Basis des ersten, zweiten und dritten Eingabewertes;
- Erfassen der aktuellen Geländeneigung mittels des mindestens einen Neigungswinkelsensors;
- Erfassen der aktuellen Fahrgeschwindigkeit mittels des mindestens einen weiteren Sensors;
- Erfassen des aktuell eingestellten Gangs des Schaltgetriebes;
- Bestimmung eines Schaltzeitpunktes zum Schalten des Schaltgetriebes in Abhängigkeit der aktuellen Geländeneigung, des aktuellen Gangs und der aktuellen Fahrgeschwindigkeit in einen anderen Gang, und
- Übermitteln eines Schaltsignals zum Schalten des Schaltgetriebes in einen anderen Gang von der Recheneinheit an den mindestens einen Schaltaktuator auf Basis des individualisierten Schaltalgorithmus.

Das erfindungsgemäße Verfahren ermöglicht eine schnelle und unkomplizierte Wahl einer an den individuellen Fahrradfahrer angepassten individuellen Schaltstrategie, die der optimalen Schaltstrategie, die der Fahrradfahrer bei einer manuellen Einstellung des Schaltgetriebes wählen würde, besonders nahe kommt. Dies reduziert die manuell notwendigen Eingriffe des Fahrradfahrers in die Schaltstrategie während der Fahrt und erhöht damit den Fahrkomfort und die Fahrsicherheit.

Mittels der Recheneinheit wird insbesondere auf Basis des ersten Eingabewertes E1, des zweiten Eingabewertes E2 und des dritten Eingabewertes E3 eine Ebene in einem dreidimensionalen Koordinatensystem mit den Koordinaten x, y und z definiert, wobei die x-Koordinate einer Fahrgeschwindigkeit entspricht, wobei die y-Koordinate einem Gang des Schaltgetriebes entspricht und wobei die z-Koordinate einer Geländeneigung entspricht, und wobei die mindestens eine Recheneinheit ein Schaltsignal zum Schalten des Schaltgetriebes in einen anderen Gang an den mindestens einen Schaltaktuator ausgibt, wenn ein aktueller Fahrzustand der durch die aktuelle Fahrgeschwindigkeit, einen aktuell gewählten Gang des Schaltgetriebes und die aktuelle Geländeneigung bestimmt ist, in der definierten Ebene liegt oder sich der definierten Ebene annähert.

Die Ebene wird aus den drei Eingabewerten ermittelt, wobei insbesondere eine Hessesche Normalform der Ebenengleichung gewählt wird. Die Ebenengleichung wird als Basis für die individualisierte Schaltstrategie in der mindestens einen Recheneinheit hinterlegt.

Für das Verfahren hat es sich bewährt, wenn eine Reihe von aufeinanderfolgenden Fahrzuständen ermittelt werden und aus diesen ein zukünftiger Fahrzustandsverlauf prognostiziert wird. Bei einer prognostizierten Annäherung des Fahrzustandsverlaufs an die definierte Ebene wird das Schaltsignal zum Schalten des Schaltgetriebes in einen anderen Gang von der Recheneinheit an den mindestens einen Schaltaktuator übermittelt. Der Fahrkomfort für den Fahrradfahrer wird durch eine derartige Berücksichtigung der aktuellen Fahrdynamik weiter erhöht.

Insbesondere wird bei einer Annäherung des aktuellen Fahrzustandes oder des prognostizierten Fahrzustandsverlaufs an die definierte Ebene von oberhalb der Ebene ein Schaltsignal zum Schalten des Schaltgetriebes in einen nächsttieferen Gang an den Schaltaktuator übermittelt. Bei einer Annäherung des aktuellen Fahrzustandes oder des prognostizierten Fahrzustandsverlaufs an die definierte Ebene von unterhalb der Ebene wird ein Schaltsignal zum Schalten des Schaltgetriebes in einen nächsthöheren Gang an den Schaltaktuator übermittelt. Dies ermöglicht ein flüssiges automatisches Schalten auch bei stark wechselndem Fahrgelände.

Die Figuren 1 bis 3 sollen eine erfindungsgemäße Vorrichtung sowie ein erfindungsgemäßes Verfahren beispielhaft erläutern. So zeigt:
- Figur 1: schematisch eine Vorrichtung zum automatischen Schalten eines Schaltgetriebes eines Fahrrades;
- Figur 2: eine Darstellung einer aus drei individuellen Eingabewerten E1, E2, E3 definierten Ebene in einem dreidimensionalen Koordinatensystem; und
- Figur 3: ein Fahrrad mit einer Vorrichtung gemäß Figur 1.

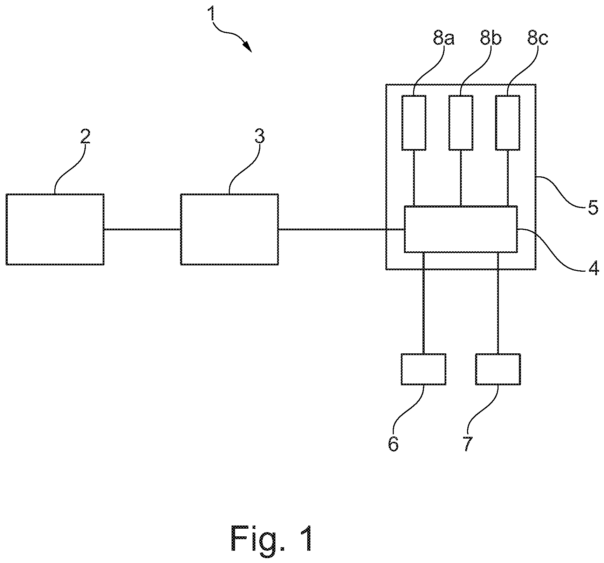

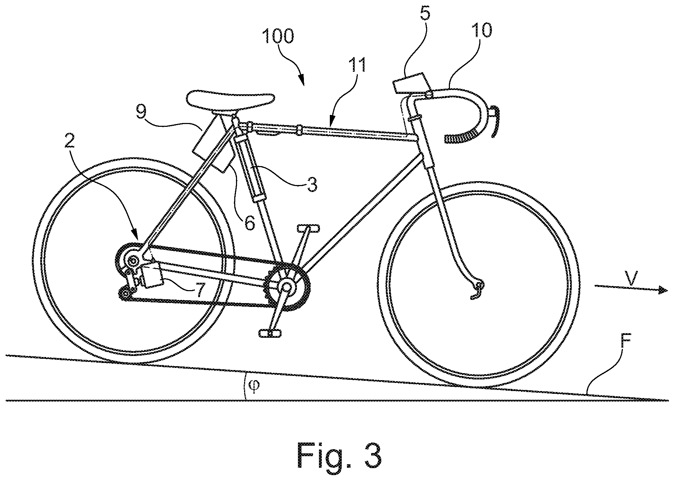

Figur 1 zeigt schematisch eine Vorrichtung 1 zum automatischen Schalten eines Schaltgetriebes 2 eines Fahrrades 100 (vergleiche Figur 3) umfassend einen Schaltaktuator 3 zur automatischen Betätigung des Schaltgetriebes 2, eine mit dem Schaltaktuator 3 verbundene Recheneinheit 4 und eine mit der Recheneinheit 4 verbundene Bedien- und Anzeigeeinheit 5. Die Recheneinheit 4 ist hier in die Bedien-und Anzeigeeinheit 5 integriert angeordnet, kann aber auch getrennt davon angeordnet und drahtlos oder über eine elektrische Leitung datentechnisch mit der Bedien- und Anzeigeeinheit 5 verbunden sein. Weiterhin umfasst die Vorrichtung 1 einen Neigungswinkelsensor 6 zur Erfassung einer aktuellen Geländeneigung p und einen weiteren Sensor 7 zur Erfassung einer aktuellen Fahrgeschwindigkeit v des Fahrrades 100, wobei der Neigungswinkelsensor 6 und der weitere Sensor 7 mit der Recheneinheit 4 verbunden sind.

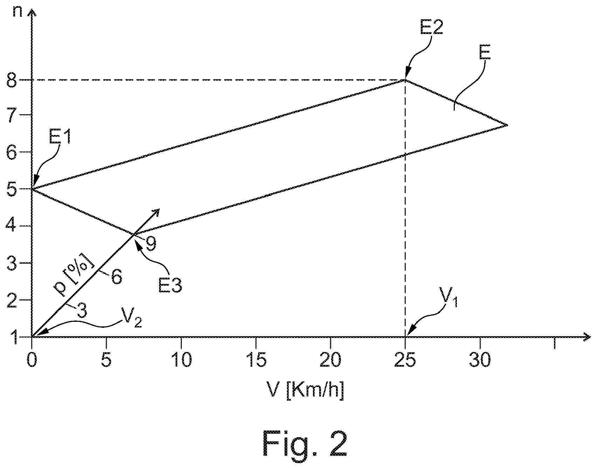

Die Bedien- und Anzeigeeinheit 5 stellt eine erste Eingabeeinrichtung 8a zur Eingabe eines ersten Eingabewertes E1 (vergleiche Figur 2) in Form eines Ganges n des Schaltgetriebes 2 zum Anfahren auf einer ebenen Fahrbahn, d.h. bei einer Geländeneigung p = 0 %, bereit. Die Bedien- und Anzeigeeinheit 5 stellt weiterhin eine zweite Eingabeeinrichtung 8b zur Eingabe eines zweiten Eingabewertes E2 in Form einer Fahrgeschwindigkeit v₁ des Fahrrades 100 bereit, bei welcher auf ebener Fahrbahn, d.h. bei einer Geländeneigung p = 0 %, in einen maximalen Gang n des Schaltgetriebes 2 geschalten wird. Die Bedien- und Anzeigeeinheit 5 stellt eine dritte Eingabeeinrichtung 8c zur Eingabe eines dritten Eingabewertes E3 in Form einer weiteren Fahrgeschwindigkeit v₂ des Fahrrades 100 bereit, bei welcher auf einer Fahrbahn F (vergleiche Figur 3) mit einer positiven Geländeneigung p in einen für diese Geländeneigung p maximalen bzw. optimalen Gang n geschalten wird. In der Recheneinheit 4 ist ein auf Basis des ersten, zweiten und dritten Eingabewertes E1, E2, E3 individualisierbarer Schaltalgorithmus hinterlegt.

Figur 2 zeigt eine Darstellung einer aus drei individuellen Eingabewerten E1, E2, E3 definierten Ebene in einem dreidimensionalen Koordinatensystem. Dabei ist ein dreidimensionales Koordinatensystem mit den Koordinaten x, y und z dargestellt, wobei die x-Koordinate einer Fahrgeschwindigkeit v in km/h entspricht, wobei die y-Koordinate einem Gang n des Schaltgetriebes 2 (vergleiche Figur 1) entspricht und wobei die z-Koordinate einer Geländeneigung p in % entspricht. Hier ist ein Schaltgetriebe 2 mit n = 8 Gängen vorhanden. Der erste Eingabewert E1 ist hier durch den Fahrradfahrer in Form eines Ganges n = 5 des Schaltgetriebes 2 zum Anfahren auf einer ebenen Fahrbahn mit einer Geländeneigung p = 0 % festgelegt worden. Der zweite Eingabewert E2 ist hier durch den Fahrradfahrer in Form einer Fahrgeschwindigkeit v₁ = 25 km/h des Fahrrades festgelegt worden, bei welcher auf ebener Fahrbahn mit einer Geländeneigung p = 0 % in einen maximalen Gang n = 8 des Schaltgetriebes 2 geschalten werden soll. Der dritte Eingabewert E3 ist hier durch den Fahrradfahrer in Form einer weiteren Fahrgeschwindigkeit v₂ = 0 km/h des Fahrrades festgelegt worden, bei welcher auf einer Fahrbahn mit einer positiven Geländeneigung, hier von p = 9 %, in einen für die Geländeneigung maximalen bzw. optimalen Gang n = 1 des Schaltgetriebes 2 geschalten werden soll. Der "maximale" Gang ist logischer Weise in der Ebene E ein anderer Gang n des Schaltgetriebes 2 als der maximale bzw. optimale Gang bei einer positiven Geländeneigung bzw. Steigung von beispielsweise 9 %.

Die drei Eingabewerte E1, E2, E3 definieren drei Punkte im dreidimensionalen Koordinatensystem, durch die die Ebene E aufgespannt wird. Der in der Recheneinheit 4 hinterlegte Schaltalgorithmus wird auf Basis der definierten Ebene E individualisiert. Die Recheneinheit 4 ist eingerichtet, ein Schaltsignal zum Schalten des Schaltgetriebes 2 in einen anderen Gang n an den mindestens einen Schaltaktuator 3 auszugeben, wenn ein aktueller Fahrzustand, der durch die aktuelle Fahrgeschwindigkeit v, einen aktuell gewählten Gang n des Schaltgetriebes 2 und die aktuelle Geländeneigung p bestimmt ist, in der definierten Ebene E liegt oder sich der definierten Ebene E annähert. Es wird bevorzugt eine Reihe von aufeinanderfolgenden Fahrtzuständen ermittelt und aus diesen ein zukünftiger Fahrzustandsverlauf prognostiziert. Bei einer prognostizierten Annäherung des Fahrzustandsverlaufs an die definierte Ebene E wird ein Schaltsignal zum Schalten des Schaltgetriebes 2 in einen anderen Gang n von der mindestens einen Recheneinheit 4 an den mindestens einen Schaltaktuator 3 übermittelt. Bei einer Annäherung des aktuellen Fahrzustandes oder des prognostizierten Fahrzustandsverlaufs an die definierte Ebene E von oberhalb der Ebene E wird ein Schaltsignal zum Schalten des Schaltgetriebes 2 in einen nächsttieferen Gang n-1 an den Schaltaktuator 3 übermittelt. Bei einer Annäherung des aktuellen Fahrzustandes oder des prognostizierten Fahrzustandsverlaufs an die definierte Ebene E von unterhalb der Ebene E wird ein Schaltsignal zum Schalten des Schaltgetriebes 2 in einen nächsthöheren Gang n+1 an den Schaltaktuator 3 übermittelt.

Figur 3 zeigt ein Fahrrad 100 mit einer Vorrichtung gemäß Figur 1. Gleiche Bezugszeichen wie in Figur 1 kennzeichnen gleiche Elemente. Das Fahrrad 100 befindet sich auf einer Fahrbahn F, die eine Geländeneigung p, hier eine negative Geländeneigung bzw. ein Gefälle, aufweist. Die Bedien- und Anzeigeeinheit 5 der Vorrichtung ist hier am Lenker 10 des Fahrrades 100 angeordnet, kann aber auch am Rahmen 11 des Fahrrades 100 angeordnet sein, wobei eine Anordnung im Sicht- und Bedienbereich des Fahrradfahrers bevorzugt ist. Das Fahrrad 100 weist eine Energieversorgungseinrichtung 9 auf, welche zur Versorgung des Schaltaktuators 3 dient und weiterhin zur elektrischen Versorgung der Bedien- und Anzeigeeinheit 5 sowie der hier nicht gesondert dargestellten Recheneinheit 4 (vergleiche Figur 1) dienen kann. Alternativ können die Bedien- und Anzeigeeinheit 5 und die Recheneinheit 4 auch über eine Batterie der Bedien- und Anzeigeeinheit 5 versorgt werden.

Die in den Figuren 1 bis 3 dargestellten Ausführungsformen der erfindungsgemäßen Vorrichtung und des erfindungsgemäßen Verfahrens sind lediglich beispielhaft gewählt und können in weiten Grenzen verändert werden, ohne den Gegenstand der Erfindung zu verlassen. So können mehrere Schaltaktuatoren und/oder mehrere Recheneinheiten, gegebenenfalls auch mehrere Bedien- und Anzeigeeinheit vorhanden sein.

### Bezugszeichenliste

- 1: Vorrichtung
- 2: Schaltgetriebe
- 3: Schaltaktuator
- 4: Recheneinheit
- 5: Bedien- und Anzeigeeinheit
- 6: Neigungswinkelsensor
- 7: weiterer Sensor
- 8a: erste Eingabeeinrichtung
- 8b: zweite Eingabeeinrichtung
- 8c: dritte Eingabeeinrichtung
- 9: Energieversorgungseinrichtung
- 10: Lenker
- 11: Rahmen
- 100: Fahrrad
- E1: erster Eingabewert
- E2: zweiter Eingabewert
- E3: dritter Eingabewert
- E: Ebene
- F: Fahrbahn
- n: Gang des Schaltgetriebes
- v: Fahrgeschwindigkeit
- p: Geländeneigung

## Patentansprüche

1. Vorrichtung (1) zum automatischen Schalten eines Schaltgetriebes (2) eines Fahrrades (100), insbesondere eines Elektrofahrrades, umfassend mindestens einen Schaltaktuator (3) zur automatischen Betätigung des Schaltgetriebes (2), mindestens eine mit dem mindestens einen Schaltaktuator (3) verbundene Recheneinheit (4), eine mit der mindestens einen Recheneinheit (4) verbundene Bedien- und Anzeigeeinheit (5), mindestens einen Neigungswinkelsensor (6) zur Erfassung einer aktuellen Geländeneigung (p) und mindestens einen weiteren Sensor (7) zur Erfassung einer aktuellen Fahrgeschwindigkeit (v) des Fahrrades (100), wobei der mindestens eine Neigungswinkelsensor (6) und der mindestens eine weitere Sensor (7) mit der mindestens einen Recheneinheit (4) verbunden sind,
**dadurch gekennzeichnet, dass** die Bedien- und Anzeigeeinheit (5)
- eine erste Eingabeeinrichtung (8a) zur Eingabe eines ersten Eingabewertes (E1) in Form eines Ganges (n) des Schaltgetriebes (2) zum Anfahren auf einer ebenen Fahrbahn (F) bereitstellt,
- eine zweite Eingabeeinrichtung (8b) zur Eingabe eines zweiten Eingabewertes (E2) in Form einer Fahrgeschwindigkeit (v) des Fahrrades (100) bereitstellt, bei welcher auf ebener Fahrbahn (F) in einen maximalen Gang (n) des Schaltgetriebes (2) geschalten wird;
- eine dritte Eingabeeinrichtung (8c) zur Eingabe eines dritten Eingabewertes (E3) in Form einer weiteren Fahrgeschwindigkeit (v) des Fahrrades (100) aufweist, bei welcher auf einer Fahrbahn (F) mit einer positiven Geländeneigung (p) in einen für diese Geländeneigung maximalen Gang (n) geschalten wird; und
wobei in der mindestens einen Recheneinheit (4) ein auf Basis des ersten, zweiten und dritten Eingabewertes (E1, E2, E3) individualisierbarer Schaltalgorithmus hinterlegt ist.

2. Vorrichtung nach Anspruch 1, **dadurch gekennzeichnet, dass** zumindest die zweite Eingabeeinrichtung (8b) und/oder zumindest die dritte Eingabeeinrichtung (8c) durch einen Schieberegler gebildet ist.

3. Vorrichtung nach Anspruch 2, **dadurch gekennzeichnet, dass** die Bedien- und Anzeigeeinheit (5) eine graphische Simulation des Schiebereglers bereitstellt.

4. Vorrichtung nach einem der Ansprüche 1 bis 3, **dadurch gekennzeichnet, dass** die mindestens eine Recheneinheit (4) eingerichtet ist, mit Hilfe des ersten Eingabewertes (E1), des zweiten Eingabewertes (E2) und des dritten Eingabewertes (E3) eine Ebene (E) in einem dreidimensionalen Koordinatensystem mit den Koordinaten x, y und z zu definieren, wobei die x-Koordinate einer Fahrgeschwindigkeit (v) entspricht, wobei die y-Koordinate einem Gang (n) des Schaltgetriebes (2) entspricht und wobei die z-Koordinate einer Geländeneigung (p) entspricht, dass der in der Recheneinheit (4) hinterlegte Schaltalgorithmus auf Basis der definierten Ebene (E) individualisierbar ist, und dass die mindestens eine Recheneinheit (4) eingerichtet ist, ein Schaltsignal zum Schalten des Schaltgetriebes (2) in einen anderen Gang (n) an den mindestens einen Schaltaktuator (3) auszugeben, wenn ein aktueller Fahrzustand, der durch die aktuelle Fahrgeschwindigkeit (v), einen aktuell gewählten Gang (n) des Schaltgetriebes (2) und die aktuelle Geländeneigung (p) bestimmt ist, in der definierten Ebene (E) liegt oder sich der definierten Ebene (E) annähert.

5. Verfahren zum automatischen Schalten eines Schaltgetriebes (2) eines Fahrrades (100), insbesondere eines Elektrofahrrades, umfassend eine Vorrichtung (1) nach einem der Ansprüche 1 bis 4, mit folgenden Schritten:
- Auswahl eines Ganges (n) des Schaltgetriebes (2) zum Anfahren auf einer ebenen Fahrbahn (F) mittels der ersten Eingabeeinrichtung (8a);
- Auswahl einer Fahrgeschwindigkeit (v) des Fahrrades (100), bei welcher auf ebener Fahrbahn (F) in einen maximalen Gang (n) des Schaltgetriebes (2) geschalten wird, mittels der zweiten Eingabeeinrichtung (8b);
- Auswahl einer weiteren Fahrgeschwindigkeit (v) des Fahrrades (100), bei welcher auf einer Fahrbahn (F) mit einer positiven Geländeneigung (p) in den für diese Geländeneigung (p) maximalen Gang (n) geschalten wird, mittels der dritten Eingabeeinrichtung (8c);
- Erfassen der aktuellen Geländeneigung (p) mittels des mindestens einen Neigungswinkelsensors (6);
- Erfassen der aktuellen Fahrgeschwindigkeit (v) mittels des mindestens einen weiteren Sensors (7);
- Erfassen des aktuell eingestellten Gangs (n) des Schaltgetriebes (2);
- Bestimmung eines Schaltzeitpunktes zum Schalten des Schaltgetriebes (2) in Abhängigkeit der aktuellen Geländeneigung (p), des aktuellen Gangs (n) und der aktuellen Fahrgeschwindigkeit (v) in einen anderen Gang (n),
- Individualisieren des in der mindestens einen Recheneinheit (4) hinterlegten Schaltalgorithmus auf Basis des ersten, zweiten und dritten Eingabewertes (E1, E2, E3), und
- Übermitteln eines Schaltsignals zum Schalten des Schaltgetriebes (2) in einen anderen Gang (n) von der Recheneinheit (4) an den mindestens einen Schaltaktuator (3) auf Basis des individualisierten Schaltalgorithmus.

6. Verfahren nach Anspruch 5, **dadurch gekennzeichnet, dass** mittels der Recheneinheit (4) auf Basis des ersten Eingabewertes (E1), des zweiten Eingabewertes (E2) und des dritten Eingabewertes (E3) eine Ebene (E) in einem dreidimensionalen Koordinatensystem mit den Koordinaten x, y und z definiert wird, wobei die x-Koordinate einer Fahrgeschwindigkeit (v) entspricht, wobei die y-Koordinate einem Gang (n) des Schaltgetriebes (2) entspricht und wobei die z-Koordinate einer Geländeneigung (p) entspricht, und wobei die mindestens eine Recheneinheit (4) ein Schaltsignal zum Schalten des Schaltgetriebes (2) in einen anderen Gang (n) an den mindestens einen Schaltaktuator (3) ausgibt, wenn ein aktueller Fahrzustand, der durch die aktuelle Fahrgeschwindigkeit (v), einen aktuell gewählten Gang (n) des Schaltgetriebes und die aktuelle Geländeneigung (p) bestimmt ist, in der definierten Ebene (E) liegt oder sich der definierten Ebene (E) annähert.

7. Verfahren nach Anspruch 6, **dadurch gekennzeichnet, dass** eine Reihe von aufeinanderfolgenden Fahrtzuständen ermittelt werden und aus diesen ein zukünftiger Fahrtzustandsverlauf prognostiziert wird, und dass bei einer prognostizierten Annäherung des Fahrzustandsverlaufs an die definierte Ebene (E) das Schaltsignal zum Schalten des Schaltgetriebes (2) in einen anderen Gang (n) von der mindestens einen Recheneinheit (4) an den mindestens einen Schaltaktuator (3) übermittelt wird.

8. Verfahren nach einem der Ansprüche 6 oder 7, **dadurch gekennzeichnet, dass** bei einer Annäherung des aktuellen Fahrzustandes oder des prognostizierten Fahrzustandsverlaufs an die definierte Ebene (E) von oberhalb der Ebene (E) ein Schaltsignal zum Schalten des Schaltgetriebes (2) in einen nächsttieferen Gang (n) an den Schaltaktuator (3) übermittelt wird.

9. Verfahren nach einem der Ansprüche 6 bis 8, **dadurch gekennzeichnet, dass** bei einer Annäherung des aktuellen Fahrzustandes oder des prognostizierten Fahrzustandsverlaufs an die definierte Ebene (E) von unterhalb der Ebene (E) ein Schaltsignal zum Schalten des Schaltgetriebes (2) in einen nächsthöheren Gang (n) an den Schaltaktuator (3) übermittelt wird.

10. Verwendung einer Vorrichtung (1) nach einem der Ansprüche 1 bis 4 zum automatischen Schalten eines Schaltgetriebes (2) eines Fahrrades (100) oder eines Elektrofahrrades, insbesondere eines Pedelec oder eines E-Bike.

## Claims

1. Device (1) for automatically shifting a gearshift mechanism (2) of a bicycle (100), in particular of an electric bicycle, comprising at least one shifting actuator (3) for automatically activating the gearshift mechanism (2), at least one computing unit (4) which is connected to the at least one shifting actuator (3), an operator control and display unit (5) which is connected to the at least one computing unit (4), at least one inclination angle sensor (6) for detecting a current terrain inclination (p) and at least one further sensor (7) for detecting a current velocity (v) of the bicycle (100), wherein the at least one inclination angle sensor (6) and the at least one further sensor (7) are connected to the at least one computing unit (4),
**characterized in that** the operator control and display unit (5)
- makes available a first input apparatus (8a) for inputting a first input value (E1) in the form of a gear speed (n) of the gearshift mechanism (2) for starting on a level underlying surface (F),
- makes available a second input apparatus (8b) for inputting a second input value (E2) in the form of a velocity (v) of the bicycle (100), at which shifting into a maximum gear speed (n) of the gearshift mechanism (2) takes place on a level underlying surface (F);
- has a third input apparatus (8c) for inputting a third input value (E3) in the form of a further velocity (v) of the bicycle (100), at which shifting into a maximum gear speed (n) for this terrain inclination takes place on an underlying surface (F) with a positive terrain inclination (ρ); and
wherein a shifting algorithm which can be individualized on the basis of the first, second and third input values (E1, E2, E3) is stored in the at least one computing unit (4) .

2. Device according to Claim 1, **characterized in that** at least the second input apparatus (8b) and/or at least the third input apparatus (8c) are/is formed by a slide controller.

3. Device according to Claim 2, **characterized in that** the operator control and display unit (5) makes available a graphic simulation of the slide controller.

4. Device according to one of Claims 1 to 3, **characterized in that** the at least one computing unit (4) is configured to define, with the aid of the first input value (E1), the second input value (E2) and the third input value (E3), a plane (E) in a three-dimensional coordinate system with the coordinates x, y and z, wherein the x coordinate corresponds to a velocity (v), wherein the y coordinate corresponds to a gear speed (n) of the gearshift mechanism (2), and wherein the z coordinate corresponds to a terrain inclination (ρ), **in that** the shifting algorithm which is stored in the computing unit (4), can be individualized on the basis of the defined plane (E), and **in that** the at least one computing unit (4) is configured to output a shifting signal for shifting the gearshift mechanism (2) into another gear speed (n) to the at least one shifting actuator (3) if a current riding state, which is determined by the current velocity (v), a currently selected gear speed (n) of the gearshift mechanism (2) and the current terrain inclination (p) is in the defined plane (E) or approaches the defined plane (E).

5. Method for automatically shifting a gearshift mechanism (2) of a bicycle (100), in particular of an electric bicycle, comprising a device (1) according to one of Claims 1 to 4, comprising the following steps:
- selecting a gear speed (n) of the gearshift mechanism (2) for starting on a level underlying surface (F) by means of the first input apparatus (8a);
- selecting a velocity (v) of the bicycle (100) at which shifting into a maximum gear speed (n) of the gearshift mechanism (2) takes place on a level underlying surface (F) by means of the second input apparatus (8b);
- selecting a further velocity (v) of the bicycle (100) at which shifting into the maximum gear speed (n) for this terrain inclination (ρ) takes place on an underlying surface (F) with a positive terrain inclination (p) by means of the third input apparatus (8c) ;
- detecting the current terrain inclination (ρ) by means of the at least one inclination angle sensor (6);
- detecting the current velocity (v) by means of the at least one further sensor (7);
- detecting the currently set gear speed (n) of the gearshift mechanism (2);
- determining a shifting time for shifting the gearshift mechanism (2) into another gear speed (n) as a function of the current terrain inclination (ρ), the current gear speed (n) and the current velocity (v),
- individualizing the shifting algorithm, stored in the at least one computing unit (4), on the basis of the first, second and third input values (E1, E2, E3),
and
- transmitting a shifting signal for shifting the gearshift mechanism (2) into another gear speed (n) from the computing unit (4) to the at least one shifting actuator (3) on the basis of the individualized shifting algorithm.

6. Method according to Claim 5, **characterized in that** a plane (E) is defined in a three-dimensional coordinate system with the coordinates x, y and z on the basis of the first input value (E1), the second input value (E2) and the third input value (E3) by means of the computing unit (4), wherein the x coordinate corresponds to a velocity (v), wherein the y coordinate corresponds to a gear speed (n) of the gearshift mechanism (2), and wherein the z coordinate corresponds to a terrain inclination (p), and wherein the at least one computing unit (4) outputs a shifting signal for shifting the gearshift mechanism (2) into another gear speed (n) to the at least one shifting actuator (3) if a current riding state, which is determined by the current velocity (v), a currently selected gear speed (n) of the gearshift mechanism and the current terrain inclination (ρ), is in the defined plane (E) or approaches the defined plane (E) .

7. Method according to Claim 6, **characterized in that** a series of successive travel states are acquired and a future travel state profile is predicted from said travel states and **in that** when it is predicted that the riding state profile approaches the defined plane (E), the shifting signal for shifting the gearshift mechanism (2) into another gear speed (n) is transmitted from the at least one computing unit (4) to the at least one shifting actuator (3).

8. Method according to either of Claims 6 and 7, **characterized in that** when the current riding state or the predicted riding state profile approaches the defined plane (E) from above the plane (E), a shifting signal for shifting the gearshift mechanism (2) into the next lowest gear speed (n) is transmitted to the shifting actuator (3) .

9. Method according to one of Claims 6 to 8, **characterized in that** when the current riding state or the predicted riding state profile approaches the defined plane (E) from below the plane (E), a shifting signal for shifting the gearshift mechanism (2) into the next highest gear speed (n) is transmitted to the shifting actuator (3).

10. Use of a device (1) according to one of Claims 1 to 4 for automatically shifting a gearshift mechanism (2) of a bicycle (100) or of an electric bicycle, in particular of a pedelec or of an e-bike.

## Revendications

1. Arrangement (1) de changement de rapport automatique d'une boîte de vitesses (2) d'une bicyclette (100), notamment d'une bicyclette électrique, comprenant au moins un actionneur de changement de rapport (3) destiné à actionner automatiquement la boîte de vitesses (2), au moins une unité de calcul (4) reliée à l'au moins un actionneur de changement de rapport (3), une unité d'opération et d'affichage (5) reliée à l'au moins une unité de calcul (4), au moins un capteur d'angle d'inclinaison (6) destiné à détecter une inclinaison de terrain (ρ) actuelle et au moins un capteur supplémentaire (7) destiné à détecter une vitesse de déplacement (v) actuelle de la bicyclette (100), l'au moins un capteur d'angle d'inclinaison (6) et l'au moins un capteur supplémentaire (7) étant reliés à l'au moins une unité de calcul (4),
**caractérisé en ce que** l'unité d'opération et d'affichage (5)
- met à disposition un premier dispositif de saisie (8a) destiné à saisir une première valeur saisie (E1) sous la forme d'un rapport (n) de la boîte de vitesses (2) en vue du démarrage sur une chaussée plane (F),
- met à disposition un deuxième dispositif de saisie (8b) destiné à saisir une deuxième valeur saisie (E2) sous la forme d'une vitesse de déplacement (v) de la bicyclette (100) à laquelle, sur une chaussée plane (F), s'effectue un changement de rapport dans un rapport maximal (n) de la boîte de vitesses (2),
- met à disposition un troisième dispositif de saisie (8c) destiné à saisir une troisième valeur saisie (E3) sous la forme d'une vitesse de déplacement (v) supplémentaire de la bicyclette (100) à laquelle, sur une chaussée (F) ayant une inclinaison de terrain (ρ) positive, s'effectue un changement de rapport dans un rapport maximal (n) pour cette inclinaison de terrain, et
un algorithme de changement de rapport qui peut être individualisé en fonction de la première, de la deuxième et de la troisième valeur saisie (E1, E2, E3) étant enregistré dans l'au moins une unité de calcul (4).

2. Arrangement selon la revendication 1, **caractérisé en ce qu'**au moins le deuxième dispositif de saisie (8b) et/ou au moins le troisième dispositif de saisie (8c) est formé par un élément de réglage à curseur.

3. Arrangement selon la revendication 2, **caractérisé en ce que** l'unité d'opération et d'affichage (5) fournit une simulation graphique de l'élément de réglage à curseur.

4. Arrangement selon l'une des revendications 1 à 3, **caractérisé en ce que** l'au moins une unité de calcul (4) est conçue pour définir, à l'aide de la première valeur saisie (E1), de la deuxième valeur saisie (E2) et de la troisième valeur saisie (E3), un plan (E) dans un système de coordonnées tridimensionnel ayant les coordonnées x, y et z, la coordonnée x correspondant à une vitesse de déplacement (v), la coordonnée y correspondant à un rapport (n) de la boîte de vitesses (2) et la coordonnée z correspondant à une inclinaison de terrain (ρ), **en ce que** l'algorithme de changement de rapport enregistré dans l'unité de calcul (4) peut être individualisé en fonction du plan (E) défini, et **en ce que** l'au moins une unité de calcul (4) est conçue pour délivrer, au niveau de l'au moins un actionneur de changement de rapport (3), un signal de changement de rapport destiné à faire passer la boîte de vitesses (2) dans un autre rapport (n) lorsqu'un état de déplacement actuel, lequel est défini par la vitesse de déplacement (v) actuelle, un rapport (n) actuellement sélectionné de la boîte de vitesses (2) et l'inclinaison de terrain (ρ) actuelle, se trouve dans le plan (E) défini ou s'approche du plan (E) défini.

5. Procédé de changement de rapport automatique d'une boîte de vitesses (2) d'une bicyclette (100), notamment d'une bicyclette électrique, comportant un arrangement (1) selon l'une des revendications 1 à 4, comprenant les étapes suivantes :
- sélection, au moyen du premier dispositif de saisie (8a), d'un rapport (n) de la boîte de vitesses (2) en vue du démarrage sur une chaussée plane (F),
- sélection, au moyen du deuxième dispositif de saisie (8b), d'une vitesse de déplacement (v) de la bicyclette (100) à laquelle, sur une chaussée plane (F), s'effectue un changement de rapport dans un rapport maximal (n) de la boîte de vitesses (2),
- sélection, au moyen du troisième dispositif de saisie (8c), d'une vitesse de déplacement (v) supplémentaire de la bicyclette (100) à laquelle, sur une chaussée (F) ayant une inclinaison de terrain (ρ) positive, s'effectue un changement de rapport dans le rapport maximal (n) pour cette inclinaison de terrain (ρ),
- détection de l'inclinaison de terrain (ρ) actuelle au moyen de l'au moins un capteur d'angle d'inclinaison (6),
- détection de la vitesse de déplacement (v) actuelle au moyen de l'au moins un capteur supplémentaire (7),
- détection du rapport (n) actuellement engagé de la boîte de vitesses (2),
- définition d'un instant de changement de rapport en vue de faire passer la boîte de vitesse (2) dans un autre rapport (n) en fonction de l'inclinaison de terrain (ρ) actuelle, du rapport (n) actuel et de la vitesse de déplacement (v) actuelle,
- individualisation de l'algorithme de changement de rapport enregistré dans l'au moins une unité de calcul (4) en fonction de la première, de la deuxième et de la troisième valeur saisie (E1, E2, E3) et
- communication d'un signal de changement de rapport de l'unité de calcul (4) à l'au moins un actionneur de changement de rapport (3) en vue de faire passer la boîte de vitesse (2) dans un autre rapport (n) en fonction de l'algorithme de changement de rapport individualisé.

6. Procédé selon la revendication 5, **caractérisé en ce qu'**un plan (E) est défini dans un système de coordonnées tridimensionnel ayant les coordonnées x, y et z au moyen de l'unité de calcul (4) sur la base de la première valeur saisie (E1), de la deuxième valeur saisie (E2) et de la troisième valeur saisie (E3), la coordonnée x correspondant à une vitesse de déplacement (v), la coordonnée y correspondant à un rapport (n) de la boîte de vitesses (2) et la coordonnée z correspondant à une inclinaison de terrain (ρ), et l'au moins une unité de calcul (4) délivrant, au niveau de l'au moins un actionneur de changement de rapport (3), un signal de changement de rapport destiné à faire passer la boîte de vitesses (2) dans un autre rapport (n) lorsqu'un état de déplacement actuel, lequel est défini par la vitesse de déplacement (v) actuelle, un rapport (n) actuellement sélectionné de la boîte de vitesses et l'inclinaison de terrain (ρ) actuelle, se trouve dans le plan (E) défini ou s'approche du plan (E) défini.

7. Procédé selon la revendication 6, **caractérisé en ce qu'**une série d'états de déplacement successifs sont déterminés et un futur tracé de l'état de déplacement est pronostiqué à partir de ceux-ci, et **en ce que** dans le cas d'une approche pronostiquée par le tracé de l'état de déplacement du plan (E) défini, le signal de changement de rapport destiné à faire passer la boîte de vitesses (2) dans un autre rapport (n) est communiqué par l'au moins une unité de calcul (4) à l'au moins un actionneur de changement de rapport (3).

8. Procédé selon l'une des revendications 6 ou 7, **caractérisé en ce que** dans le cas où l'état de déplacement actuel ou le tracé de l'état de déplacement pronostiqué se rapproche du plan (E) défini par le dessus du plan (E), un signal de changement de rapport destiné à faire passer la boîte de vitesses (2) dans un rapport (n) immédiatement inférieur est communiqué à l'actionneur de changement de rapport (3).

9. Procédé selon l'une des revendications 6 à 8, **caractérisé en ce que** dans le cas où l'état de déplacement actuel ou le tracé de l'état de déplacement pronostiqué se rapproche du plan (E) défini par le dessous du plan (E), un signal de changement de rapport destiné à faire passer la boîte de vitesses (2) dans un rapport (n) immédiatement supérieur est communiqué à l'actionneur de changement de rapport (3).

10. Utilisation d'un arrangement (1) selon l'une des revendications 1 à 4 pour le changement de rapport automatique d'une boîte de vitesses (2) d'une bicyclette (100) ou d'une bicyclette électrique, notamment d'un vélo de type Pedelec ou E-Bike.
